(19) Europäisches Patentamt
European Patent Office
Office européen des brevets

(11) **EP 1 768 300 B1**

(12) **EUROPEAN PATENT SPECIFICATION**

(45) Date of publication and mention
of the grant of the patent:
**17.06.2009 Bulletin 2009/25**

(51) Int Cl.:
*H04L 9/08* (2006.01)

(21) Application number: **07000020.3**

(22) Date of filing: **18.10.1996**

(54) **Key agreement and transport protocol with implicit signatures**

Verfahren zur Sitzungsschlüsselerzeugung mit impliziten Unterschriften

Protocole d'accord de clé et de transport avec signatures implicites

(84) Designated Contracting States:
**CH DE FR GB LI**

(43) Date of publication of application:
**28.03.2007 Bulletin 2007/13**

(62) Document number(s) of the earlier application(s) in
accordance with Art. 76 EPC:
**96944186.4 / 0 873 617**

(73) Proprietor: **Certicom Corp.**
**Mississauga,**
**Ontario L4W 5L1 (CA)**

(72) Inventors:
• **Vanstone, Scott A.**
**Waterloo,**
**Ontario N2T 2H4 (CA)**
• **Menezes, Alfred John**
**Auburn, AL 36830 (US)**
• **Qu, Mingua**
**Mississauga,**
**Ontario L5M 5G7 (CA)**

(74) Representative: **Barton, Russell Glen et al**
**Withers & Rogers LLP**
**Goldings House**
**2 Hays Lane**
**London**
**SE1 2HW (GB)**

(56) References cited:
**EP-A- 0 393 806**     **EP-A1- 0 639 907**
**DE-A1- 3 915 262**

• MATSUMOTO T ET AL: "ON SEEKING SMART PUBLIC-KEY-DISTRIBUTION SYSTEMS" TRANSACTIONS OF THE INSTITUTE OF ELECTRONICS AND COMMUNICATION ENGINEERS OF JAPAN, SECTION E, INST. OF ELECTRONICS & COMMUNIC. ENGINEERS OF JAPAN. TOKYO, JP, vol. E69, no. 2, February 1986 (1986-02), pages 99-105, XP002056002
• BOYD C ET AL PIEPRZYK J ET AL: "DESIGN AND ANALYSIS OF KEY EXCHANGE PROTOCOLS VIA SECURE CHANNEL IDENTIFICATION" ADVANCES IN CRYPTOLOGY - ASIACRYPT '94. 4TH. INTERNATIONAL CONFERENCE ON THE THEORY AND APPLICATIONS OF CRYPTOLOGY, WOLLONGONG, AUSTRALIA, NOV. 28 - DEC. 1, 1994. PROCEEDINGS, PROCEEDINGS OF THE CONFERENCE ON THE THEORY AND APPLICATIONS OF CRYPTOLOGY, vol. CONF. 4, 28 November 1994 (1994-11-28), pages 171-181, XP000527595 ISBN: 3-540-59339-X

EP 1 768 300 B1

## Description

<u>TECHNICAL FIELD</u>

The present invention relates to key agreement protocols for transfer and authentication of encryption keys.

<u>BACKGROUND ART</u>

To retain privacy during the exchange of information it is well known to encrypt data using a key. The key must be chosen so that the correspondents are able to encrypt and decrypt messages but such that an interceptor cannot determine the contents of the message.

In a secret key cryptographic protocol, the correspondents share a common key that is secret to them. This requires the key to be agreed upon between the correspondents and for provision to be made to maintain the secrecy of the key and provide for change of the key should the underlying security be compromised.

Public key cryptographic protocols were first proposed in 1976 by Diffie-Hellman and utilized a public key made available to all potential correspondents and a private key known only to the intended recipient. The public and private keys are related such that a message encrypted with the public key of a recipient can be readily decrypted with the private key but the private key cannot be derived from the knowledge of the plaintext, ciphertext and public key.

Key establishment is the process by which two (or more) parties establish a shared secret key, called the session key. The session key is subsequently used to achieve some cryptographic goal, such as privacy. There are two kinds of key agreement protocol; key transport protocols in which a key is created by one party and securely transmitted to the second party; and key agreement protocols, in which both parties contribute information which jointly establish the shared secret key. The number of message exchanges required between the parties is called the number of passes. A key establishment protocol is said to provide implicit key authentication (or simply key authentication) if one party is assured that no other party aside from a specially identified second party may learn the value of the session key. The property of implicit key authentication does not necessarily mean that the second party actually possesses the session key. A key establishment protocol is said to provide key confirmation if one party is assured that a specially identified second party actually has possession of a particular session key. If the authentication is provided to both parties involved in the protocol, then the key authentication is said to be mutual; if provided to only one party, the authentication is said to be unilateral.

There are various prior proposals which claim to provide implicit key authentication.

Examples include the Nyberg-Rueppel one-pass protocol and the Matsumoto-Takashima-Imai (MTI) and the Goss and Yacobi two-pass protocols for key agreement.

The Nyberg-Rueppel protocol and the MTI protocol are described in EP0639907 and MATSUMOTO, T., TAKASHIMA, Y., and IMAI, H.: "On Seeking Smart Public-Key-Distribution Systems", The Transactions of the IECE of Japan, E69: p. 99-106, 1986.

The prior proposals ensure that transmissions between correspondents to establish a common key are secure and that an interloper cannot retrieve the session key and ' decrypt the ciphertext. In this way security for sensitive transactions such as transfer of funds is provided.

For example, the MTI/A0 key agreement protocol establishes a shared secret K, known to the two correspondents, in the following manner:-

1. During initial, one-time setup, key generation and publication is undertaken by selecting and publishing an appropriate system prime p and generator $\alpha \epsilon Z_p^*$ in a manner guaranteeing authenticity. Correspondent A selects as a long-term private key a random integer "a", $1 < a < p-1$, and computes a long-term public key $z_A = \alpha^a \mod p$. B generates analogous keys b, $z_B$. A and B have access to authenticated copies of each other's long-term public key.

2. The protocol requires the exchange of the following messages.

$$A \rightarrow B: \alpha^x \mod p \quad (1)$$

$$A \leftarrow B: \alpha^y \mod p \quad (2)$$

The values of x and y remain secure during such transmission as it is impractical to determine the exponent even when the value of $\alpha$ and the exponentiation is known provided of course that p is chosen sufficiently large.

3. To implement the protocol the following steps are performed each time a shared key is required.

(a) A chooses a random integer x, $1 \leq x \leq p-2$, and sends B message (1) i.e. $\alpha^x \mod p$.
(b) B chooses a random integer y, $1 \leq y \leq p-2$, and sends A message (2) i.e. $\alpha^y \mod p$.
(c) A computes the key $K = (\alpha^y)^a z_B^x \mod p$.
(d) B computes the key $K = (\alpha^x)^b z_A^y \mod p$.
(e) Both share the key $K = \alpha^{bx+ay}$.

In order to compute the key K, A must use his secret key a and the random integer x, both of which are known only to him. Similarly, B must use her secret key b and random integer y to compute the session key K. Provided the secret keys a,b remain uncompromised, an interloper cannot generate a session key identical to the other correspondent. Accordingly, any ciphertext will not be decipherable by both correspondents.

As such this and related protocols have been considered satisfactory for key establishment and resistant to conventional eavesdropping or man-in-the middle attacks.

In some circumstances, it may be advantageous for an adversary to mislead one correspondent as to the true identity of the other correspondent.

In such an attack an active adversary or interloper E modifies messages exchanged between A and B, with the result that B believes that he shares a key K with E while A believes that she shares the same key K with B. Event though E does not learn the value of K the misinformation as to the identity of the correspondents may be useful.

A practical scenario where such an attack may be launched successfully is the following. Suppose that B is a bank branch and A is an account holder. Certificates are issued by the bank headquarters and within the certificate is the account information of the holder. Suppose that the protocol for electronic deposit of funds is to exchange a key with a bank branch via a mutually authenticated key agreement. Once B has authenticated the transmitting entity, encrypted funds are deposited to the account number in the certificate. If no further authentication is done in the encrypted deposit message (which might be the case to save bandwidth) then the deposit will be made to E's account.

DISCLOSURE OF INVENTION

It is therefore an object of the present invention to provide a protocol in which the above disadvantages are obviated or mitigated.

This is achieved by means of the methods claimed in the set of claims appended hereto.

BRIEF DESCRIPTION OF DRAWING

Embodiments of the invention will now be described by way of example only with reference to the accompanying drawings in which:

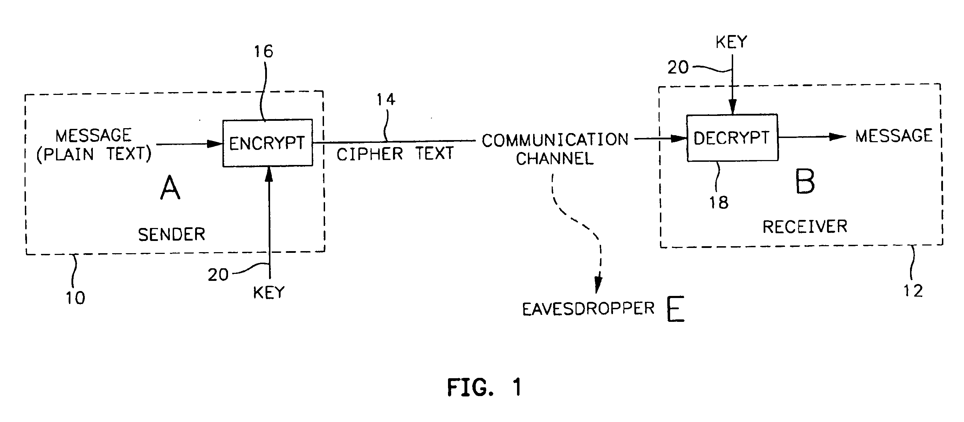

Figure 1 is a schematic representation of a data communication system.

BEST MODE FOR CARRYING OUT THE INVENTION

Referring therefore to Figure 1, a pair of correspondents, 10,12, denoted as correspondent A and correspondent B, exchange information over a communication channel 14. A cryptographic unit 16,18 is interposed between each of the correspondents 10,12 and the channel 14. A key 20 is associated with each of the cryptographic units 16,18 to convert plaintext carried between each unit 16,18 and its respective correspondent 10,12 into ciphertext carried on the channel 14.

In operation, a message generated by correspondent A, 10, is encrypted by the unit 16 with the key 20 and transmitted as ciphertext over channel 14 to the unit 18.

The key 20 operates upon the ciphertext in the unit 18 to generate a plaintext message for the correspondent B, 12. Provided the keys 20 correspond, the message received by the correspondent 12 will be that sent by the correspondent 10.

In order for the system shown in Figure 1 to operate, it is necessary for the keys 20 to be identical and therefore a key agreement protocol is established that allows the transfer of information in a public manner to establish the identical keys. A number of protocols are available for such key generation and are variants of the Diffie-Hellman key exchange. Their purpose is for parties A and B to establish a secret session key K.

The system parameters for these protocols are a prime number p and a generator $\alpha$ of the multiplicative group $Z_p^*$. Correspondent A has private key a and public key $p_A = \alpha^a$. Correspondent B has private key b and public key $p_B = \alpha^b$. In the protocol exemplified below, $text_A$ refers to a string of information that identifies party A. If the other correspondent B possesses and authentic copy of correspondent A's public key, then $text_A$ will contain A's public-key certificate, issued by a trusted center; correspondent B can use his authentic copy of the trusted center's public key to verify correspondent A's certificate, hence obtaining an authentic copy of correspondent A's public key.

In each example below it is assumed that, an interloper E wishes to have messages from A identified as having originated from E herself. To accomplish this, E selects a random integer e, $1 \le e \le p-2$, computes $p_E = (p_A)^e = \alpha^{ae} \bmod p$, and gets this certified as her public key. E does not know the exponent ae, although she knows e. By substituting $text_E$ for $text_A$, the correspondent B will assume that the message originates from E rather than A and use E's public key to generate the session key K. E also intercepts the message from B and uses his secret random integer e to modify its contents. A will then use that information to generate the same session key allowing A to communicate with B.

To avoid interloper E convincing B that he is communicating with E, the following protocol is adapted.

The purpose of the protocol is for parties A and B to establish a session key K. The protocols exemplified are role-symmetric and non-interactive.

The system parameters for this protocol are a prime number p and a generator $\alpha$ of the multiplicative group $Z_p^*$. User A has private key a and public key $p_A$

$= \alpha^a$. User B has private key b and public key $p_B = \alpha^b$.

### First Protocol (Example)

     1. A picks a random integer x, $1 \le x \le p-2$, and computes $r_A = \alpha^x$ and a signature $s_A = x - r_A a\alpha^a$ mod (p-1). A sends $\{r_A, s_A, text_A\}$ to B.

     2. B picks a random integer y, $1 \le y \le p-2$, and computes $r_B = \alpha^y$ and a signature $s_B = y - r_B b\alpha^b$ mod (p-1). B sends $\{r_B, s_B, text_B\}$ to A.

     3. A computes $\alpha^{s_B}(p_B)^{r_B}\alpha^b$ and verifies that this is equal to $r_B$. A computes the session key $K = (r_B)^x = \alpha^{xy}$.

     4. B computes $\alpha^{s_A}(p_A)^{r_A}\alpha^a$ and verifies that this is equal to $r_A$. B computes the session key $K = (r_A)^y = \alpha^{xy}$.

Should E replace $text_A$ with $text_E$, B will compute $\alpha^{s_A}(p_E)^{r_A}\alpha^a$ which will not correspond with the transmitted value of $r_A$. B will thus be alerted to the interloper E and will proceed to initiate another session key.

One drawback of the first protocol is that it does not offer perfect forward secrecy. That is, if an adversary learns the long-term private key a of party A, then the adversary can deduce all of A's past session keys. The property of perfect forward secrecy can be achieved by modifying Protocol 1 in the following way.

### Modified First Protocol (Example)

In step 1, A also sends $\alpha^{x_1}$ to B, where $x_1$ is a second random integer generated by A. Similarly, in step 2, B also sends $\alpha^{y_1}$ to A, where $y_1$ is a random integer. A and B now compute the key $K = \alpha^{xy} \oplus \alpha^{x_1 y_1}$.

Another drawback of the first protocol is that if an adversary learns the private random integer x of A, then the adversary can deduce the long-term private key a of party A from the equation $s_A = x - r_A a\alpha^a$ mod p-1. This drawback is primarily theoretical in nature since a well designed implementation of the protocol will prevent the private integers from being disclosed.

### Second Protocol (Example)

A second protocol set out below addresses these two drawbacks.

     1. A picks a random integer x, $1 \le x \le p-2$, and computes $(p_B)^x$, $\alpha^x$ and a signature $s_A = x + a\alpha^a(p_B)^x$ mod (p-1). A sends $\{\alpha^x, s_A, text_A\}$ to B.

     2. B picks a random integer y, $1 \le y \le p-2$, and computes $(p_A)^y$, $\alpha^y$ and a signature $s_B = y + b\alpha^b(p_A)^y$ mod (p-1). B sends $\{\alpha^y, S_B, text_B\}$ to A.

     3. A computes $(\alpha^y)^a$ and verifies that $\alpha^{s_B}(p_B)^{-\alpha}{}_b\alpha^{ay} = \alpha^y$. A then computes session key $K = \alpha^{ay}$

$(p_B)^x$.

     4. B computes $(\alpha^x)^b$ and verifies that $\alpha^{s_A}(p_A)^{-\alpha a}\alpha^{bx} = \alpha^x$. A then computes session key $K = \alpha^{bx}(p_A)^y$.

The second protocol improves upon the first protocol in the sense that it offers perfect forward secrecy. While it is still the case that disclosure of a private random integer x allows an adversary to learn the private key a, this will not be a problem in practice because A can destroy x as soon as she uses it in step 1 of the protocol.

If A does not have an authenticated copy of B's public key then B has to transmit a certified copy of his key to B at the beginning of the protocol. In this case, the second protocol is a three-pass protocol.

The quantity $s_A$ serves as A's signature on the value $\alpha^x$. This signature has the novel property that it can only be verified by party B. This idea can be generalized to all ElGamal-like signatures schemes.

The first and second protocols above can be modified to improve the bandwidth requirements and computational efficiency of the key agreement. The modified protocols are described below as Protocol 1' and Protocol 2'. In each case, A and B will share the common key $\alpha^{s_A s_B}$. Protocol 1' and Protocol 2' are embodiments of the claimed invention.

### Protocol 1'

     1. A picks a random integer x, $1 \le x \le p-2$, and computes $r_A = \alpha^a$ and $s_A = x + r_A a\alpha^a$ mod (p-1). A sends $\{r_A, text_A\}$ to B.

     2. B picks a random integer y, $1 \le y \le p-2$, and computes $r_B = \alpha^y$ and $s_B = y + r_B b\alpha^b$ mod (p-1). B sends $\{r_B, text_B\}$ to A.

     3. A computes $K = (r_B(p_B)^{r_B}\alpha^b)^{s_A}$ which is equivalent to $\alpha^{s_A s_B}$.

     4. B computes $K = (r_A(p_A)^{r_A}\alpha^a)^{s_B}$ which is also equivalent to $\alpha^{s_A s_B}$.

A and B thus share the common key but it will be noted that the signatures $S_A$ and $S_B$ need not be transmitted.

### Protocol 2'

     1. A picks a random integer x, $1 \le x \le p-2$, and computes $(p_B)^x$, $\alpha^x$ and $S_A = x + a(p_B)^x$ mod (p-1). A sends $\{\alpha^x, text_A\}$ to B.

     2. B picks a random integer y, $1 \le y \le p-2$, and computes $(P_A)^y$, $\alpha^y$ and $s_B = y + b(P_A)^y$ mod (p-1). B sends $\{\alpha^y, text_B\}$ to A.

     3. A computes $(\alpha^y)^a$ and $K = (\alpha^y(p_B)^{\alpha b}\alpha^{ay})^{s_A}$. i.e.

$\alpha^{s_A s_B}$.

4. B computes $(a^x)^b$ and $K=(\alpha^x(p_A)^{\alpha a}\alpha^{bx})^{s_B}$. i.e. $\alpha^{s_A s_B}$.

Again therefore the transmission of $S_A$ and $S_B$ is avoided.

A further protocol is available for parties A and B to establish a session key K.

Third Protocol (Example)

The system parameters for this protocol are a prime number p and a generator $\alpha$ for the multiplicative group $Z_p^{\;\centerdot}$. User A has private key a and public key $p_A = \alpha^a$. User B has private key b and public key $p_B = \alpha^b$.

1. A picks two random integers x, $x_1$, $1\le x, x_1\le p-2$, and computes $r_{x_1}=\alpha^{x_1}$, $r_A=\alpha^x$ and $\left(r^A\right)^{r_{x_1}}$, then computes a signature $s_A = xr_{x_1}-\left(r_A\right)^{r_{x_1}}a\alpha^a$ mod (p-1). A sends $\{r_A, s_A, \alpha^{x_1}, text_A\}$ to B.

2. B picks two random integers y, $y_1$, $1\le y, y_1\le p-2$, and computes $r_{y_1}=\alpha^{y_1}$, $r_B=\alpha^y$ and $s_B=yr_{y_1}-\left(r_B\right)^{r_{y_1}}b$ then computes a signature $\{r_B, s_B, \alpha^{Y_1}, text_B\}$ mod (p-1). A sends $\{r_B, s_B, \alpha^{Y_1}, text_B\}$ to A.

3. A computes $\alpha^{s_B}\left(p_B\right)^{\left(r_B\right)^{r_{y_1}}}$ and verifies that this is equal to $\left(r_B\right)^{r_{y_1}}$. A computes session key $K=(\alpha^{y_1})^{x_1}=\alpha^{x_1 y_1}$.

4. B computes $\alpha^{s_A}\left(p_A\right)^{\left(r_A\right)^{r_{x_1}}}$ and verifies that this is equal to $\left(r_A\right)^{r_{x_1}}$. B computes session key $K=(\alpha^{x_1})^{y_1}=\alpha^{x_1 y_1}$.

In these protocols, $(r_A, s_A)$ can be thought of as the signature of $r_{x_1}$ with the property that only A can sign the message $r_{x_1}$.

Key Transport Protocol (Example)

The protocols described above permit the establishment and authentication of a session key K. It is also desirable to establish a protocol in which permits A to transport a session key K to party B. Such a protocol is exemplified below.

1. A picks a random integer x, $1\le x\le p-2$ and computes

$r_A = \alpha^x$ and a signature $s_A = x-r_A a\alpha^a$ mod (p-1). A computes session key $K = (p_B)^x$ and sends $\{r_A, s_A, text_A\}$ to B.

2. B computes $\alpha^{s_A}(p_A)^{r_A}{}^{\alpha a}$ and verifies that this quantity is equal to $r_A$. B computes session key $K = (r_A)^b$.

Modified Key Transport Protocol

The above protocol is modified according to the invention to reduce the bandwidth by avoiding the need to transmit the signature $S_A$ as follows:

1. A picks a random integer x, $1\le x\le p-2$, and computes $r_A = \alpha^x$ and $s_A = x - r_A a\alpha^a$ mod (p-1). A computes $K=(p_B)^{s_A}$ and sends $\{r_A, text_A\}$ to B.

2. B computes $K=\alpha^x(p_A)^{-r_A}{}^{\alpha a})^b=\alpha^{bs_A}$.

All one-pass key transport protocols have the following problem of replay. Suppose that a one-pass key transport protocol is used to transmit a session key K from A to B as well as some text encrypted with the session key K. Suppose that E records the transmission from A to B. If E can at a later time gain access to B's decryption machine (but not the internal contents of the machine, such as B's private key), then, by replaying the transmission to the machine, E can recover the original text. (In this scenario, E does not learn the session key K).

This replay attack can be foiled by usual methods, such as the use of timestamps. There are, however, some practical situations when B has limited computational resources, in which it is more suitable at the beginning of each session, for B to transmit a random bit string k to A. The session key that is used to encrypt the text is then k ⊕ K, i.e. k XOR'd with K.

The signing equation $s_A = x - r_A a\alpha^a$ where $r_A = \alpha^x$ in protocol 1, and the key transportation protocols; $r_A = \alpha^{xb}$ in protocol 2, can be replaced with several variants. Some of them are:

$$r_A = s_A x + z$$

$$s_A = x\alpha^a + ar_A$$

$$s_A = xr_A + a\alpha^a$$

$$1 = ar_A + xs_A$$

All the protocols discussed above have been described in the setting of the multiplicative group $Z_p^{\;\centerdot}$. However, they can all be easily modified to work in any finite group in which the discrete logarithm problem appears intractable. Suitable choices include the multiplicative group of a finite filed (in particular the finite filed GF($2^n$), subgroups of $Z_p^{\cdot}$ of order q, and the group of points on an elliptic curve defined over a finite field. In each case, an appropriate generator $\alpha$ will be used to define the public keys.

The protocols discussed above can also be modified in a straightforward way to handle the situation when each user picks their own system parameters p and $\alpha$ (or analogous parameters if a group other than $Z_p^{\cdot}$ is used).

In the above protocols, a signature component of the general form $s_A = x + r_a.a.\alpha^a$ has been used.

The protocols may be modified to use a simpler signature component of the general form $s_A = x + r_a.a$ without jeopardizing the security.

Examples of such protocols will be described below using the same notation although it will be understood that the protocols could be expressed in alternative notation if preferred.

**Protocol 1''**

This protocol will be described using an implementation in the multiplicative group $Z_p^{\cdot}$ with the following notation:

p is a prime numbe
$\alpha$ is a generator of $Z_p^{\cdot}$,

a and b are party A's and B's respective long-term private key,
$\alpha^a$ mod p is party A's long-term private key,
$\alpha^b$ mod p is party B's long-term private key,
x is a random integer selected by A as a short-term private key,
$r_a = \alpha^x$ mod p is party A's short-term public key,
y is a random integer selected by B as a short-term private key,
$r_b = \alpha^y$ mod p is party B's short-term public key,

$\overline{r_a}$ is an integer derived from $r_a$ and is typically the 80 least significant bits of $r_a$,

$\overline{r_b}$ is an integer derived from $r_b$ and is typically the 80 least significant bits of $r_b$.

To implement the protocol,

1. A sends $r_a$ to B.
2. B sends $r_B$ to A.

3. A computes $s_A = x + \overline{r_a}.a$ mod (p-1).

4. A computes the session key K where

$$K = (\alpha^y(\alpha^b)^{\overline{r_b}})^{s_A} \mod p.$$

5. B computes $s_B = y + \overline{r_b}.b$ mod (p-1).

6. B computes the session key K where

$$K = (\alpha^x(\alpha^a)^{\overline{r_a}})^{s_B} \mod p.$$

7. The shared secret is $\alpha^{s_B s_A}$ mod p.

In this protocol, the bandwidth requirements are again reduced by the signature components combine the short and long-term keys of the correspondent to inhibit an attack by an interloper.

The above protocol may also be implemented using a subgroup of $Z_p^{\cdot}$. In this case, q will be a prime divisor of (p-1) and g will be an element of order p in $Z_p^{\cdot}$.

A's and B's public keys will be of the form $g^a$, $g^b$ respectively and the short-term keys $r_a$, $r_b$ will be of the form $g^x$, $g^y$.

The signature components $s_A$, $s_B$ are computed mod q and the session key K computed mod q as before. The shared secret is then $g^{s_A s_B}$ mod p.

As noted above, the protocols may be implemented in groups other than $Z_p^{\cdot}$ and a particularly robust group is the group of points on an elliptic curve over a finite field. An example of such an implementation is set out below as protocol 1'''.

**Protocol 1'''**

The following notation is used:

E is an elliptic curve defined over Fq,
P is a point of prime order n in E(Fq),
da (1<da<n-1) is party A's long-term private key,
$d_b$ (1<$d_b$<n-1) is party B's long-term private key,
$Q_a$ = daP is party A's long-term public key,
$Q_b$ = $d_b$P is party B's long-term public key,
k(1<k<n-1) is party A's short-term private key,
$r_a$ = kP is party A's short-term public key,
m (1<m<n-1) is party B's short-term private key,
$r_b$ = mP is party B's short-term public key,

$\overline{r_a}$ and $\overline{r_b}$ respectively are bit strings, for example the 80 least significant bits of the x co-ordinate of $r_a$ and $r_b$.

To implement the protocol:

1. A sends $r_a$ to B.

2. B sends $r_b$ to A.

3. A computes $s_A = (k + \overline{r_a} . d_a) \mod n$.

4. A computes the session key K where

$$K = s_a(r_b + \overline{r_b}Q_b)$$

5. B computes $s_B = (m + \overline{r_b}d_b) \mod n$.

6. B computes the session key K where

$$K = s_b(r_a + \overline{r_a}Q_a).$$

7. The shared secret is $S_a S_b P$.

Again, it will be noted that it is not necessary to send the signature components $s_A$, $s_B$ between the correspondent but the short and long-term keys of the correspondents are combined by the form of the components. (It will be appreciated that the notation m has been substituted for x,y in the previous examples to avoid confusion with the co-ordinate (x,y) of the points on the curve).

## Claims

1. A method of establishing a session key between a pair of correspondents A,B in a public key data communication system to permit exchange of information therebetween over a communication channel, each of said correspondents having a respective private key a,b and a public key $p_A$, $p_B$ derived from a generator $\alpha$ and respective ones of said private keys a,b, said method including the steps of:

   i) a first of said correspondents A selecting a first random integer x and exponentiating a first function $f(\alpha)$ including said generator to a power g (x) to provide a first exponentiated function $f(\alpha)^{g(x)}$ ;

   ii) said first correspondent A generating a first signature $S_A$ from said random integer x said exponentiated function $f(\alpha)^{g(x)}$ and said private key a to bind said integer x and said private key a, said first correspondent A maintaining said first signature private to itself;

   iii) said first correspondent A forwarding to a second correspondent B a message including said first exponentiated function $f(\alpha)^{g(x)}$ ;

   iv) said correspondent B selecting a second random integer y and exponentiating a second function $f(\alpha)$ including said generator to a power g(y) to provide a second exponentiated function $f(\alpha)^{g(y)}$ and generating a signature $S_B$ obtained from said second integer y said second expo-

nentiated function $f(\alpha)^{g(y)}$ and said private key b to bind said integer y and said private key b, said second correspondent B maintaining said second signature $S_B$ private to itself;

   v) said second correspondent B forwarding a message to said first correspondent A including said second exponentiated function $f(\alpha)^{g(y)}$ ; and

   vi) each of said correspondents constructing a session key K by exponentiating information made public by the other correspondent with information that is private to themselves whereby subsequent decryption of information confirms establishment of a common key and thereby the identity of said correspondents.

2. A method of claim 1 wherein said message forwarded by said first correspondent includes an identification of the first correspondent.

3. A method according to claim 1 wherein said message forwarded by said second correspondent includes an identification of said second correspondent.

4. A method according to any one of claims 1 to 3 wherein said information that is private to themselves is the respective first signature and second signature.

5. A method according to any preceding claim wherein said first function $f(\alpha)$ including said generator is said generator itself.

6. A method according to any preceding claim wherein said second function $f(\alpha)$ including said generator is said generator itself.

7. A method according to any one of claims I to 4 wherein said first function $f(\alpha)$ including said generator includes the public key $p_B$ of said second correspondent.

8. A method according to any one of claims 1 to 4 wherein said second function $f(\alpha)$ including said generator includes the public key $p_A$ of said first correspondent.

9. A method according to any one of claim 8 wherein said first function $f(\alpha)$ including said generator includes the public key $p_B$ of said second correspondent.

10. A method according to any one of claims 1 to 9 wherein said signature generated by a respective one of the correspondents combines the random integer, exponentiated function and private key of that one correspondent.

**11.** A method according to claim 10 wherein said signature $S_A$ of correspondent A is of the form $x+r_A\,a\alpha^a$ mod (p-1).

**12.** A method according to claim 10 wherein said signature $S_A$ of correspondent A is of the form $x+a\alpha^a(p_B)^x$ mod (p-1).

**13.** A method according to claim 10 wherein said signature $S_A$ of correspondent A is of the form $xr_A+a\alpha^a$.

**14.** A method according to claim 10 wherein said signature $S_B$ of correspondent B is of the form $y_B+r_B\,b\alpha^b$ mod (p-1).

**15.** A method according to claim 10 wherein said signature $S_B$ of correspondent B is of the form $y+b\alpha^b\,(p_A)^y$ mod (p-1).

**16.** A method according to claim 10 wherein said signature $S_A$ of correspondent A is of the form $x\alpha^a+ar_A$.

**17.** A method of transporting a session key K between a pair of correspondents A,B in a public key data communication system to establish a common key to permit exchange of information therebetween over a communication channel, each of said correspondents having a respective private key a,b and a public key $p_A$, $p_B$ derived from a generator $\alpha$ and respective ones of said private keys a,b, said method including the steps of:

    i) a first of said correspondents A selecting a first random integer x and exponentiating a first function $f(\alpha)$ including said generator to a power g (x) to provide a first exponentiated function $f(\alpha)^{g(x)}$ ;
    ii) said first correspondent A generating a first signature $S_A$ from said random integer x and said exponentiated function $f(\alpha)^{g(x)}$ and said private key a to bind said integer and said private key a, said first correspondent A maintaining said first signature private to itself;
    iii) said first correspondent A forwarding to a second correspondent B a message including said first exponentiated function $f(\alpha)^{g(x)}$ ;
    iv) said first correspondent computing said session key K from said public key $p_B$ of said second correspondent B and said signature $S_A$;
    v) said second correspondent B utilizing the public key $p_A$ of said first correspondent and information in said message to compute a session key K' corresponding to said session key K.

**18.** A method according to claim 17 wherein said message includes said first exponentiated function and said correspondent B combines said first exponentiated function with the private key b of correspondent B to generate said session key K'.

**19.** A method according to claim 17 or 18 wherein said first correspondent A computes said session key K by exponentiating a function of said public key $P_B$ of correspondent B with a function of said signature $s_A$.

**20.** A method according to claim 17 to 19 wherein said signature $S_A$ of correspondent A is of the form $x-r_A$ $a\alpha^a$ mod (p-1).

**21.** A method according to claim 17 to 20 wherein the signature $s_B$ of correspondent B is of the form $y-r_B$ $b\alpha^b$ mod (p-1).

**Patentansprüche**

**1.** Verfahren zum Einrichten eines Sitzungsschlüssels zwischen einem Paar Korrespondenten A, B in einem Datenkommunikationssystem mit öffentlichem Schlüssel zum Ermöglichen eines Informationsaustauschs zwischen den Korrespondenten über einen Kommunikationskanal, wobei jeder der Korrespondenten einen privaten Schlüssel a bzw. b und einen öffentlichen Schlüssel $P_A$ bzw. $P_B$ aufweist, der von einem Generator $\alpha$ und von dem jeweiligen privaten Schlüssel a bzw. b hergeleitet wird, wobei das Verfahren die Schritte aufweist:

    i) ein erster Korrespondent A wählt eine erste ganze Zufallszahl x aus und potenziert eine erste Funktion $f(\alpha)$, die den Generator enthält, mit einem Exponenten g(x), um eine erste Exponentialfunktion $f(\alpha)^{g(x)}$ bereitzustellen;
    ii) der erste Korrespondent A erzeugt eine erste Signatur $S_A$ von der ganzen Zufallszahl x, der Exponentialfunktion $f(\alpha)^{g(x)}$ und dem privaten Schlüssel a, um die ganze Zufallszahl x und den privaten Schlüssel a zu verbinden, wobei der erste Korrespondent A die erste Signatur für sich selbst vertraulich hält;
    iii) der erste Korrespondent A übermittelt eine Nachricht, die die erste Exponentialfunktion $f(\alpha)^{g(x)}$ enthält, an den zweiten Korrespondenten B;
    iv) der zweite Korrespondent B wählt eine zweite ganze Zufallszahl y aus und potenziert eine zweite Funktion $f(\alpha)$, die den Generator enthält, mit einem Exponenten g(y), um eine zweite Exponentialfunktion $f(\alpha)^{g(y)}$ bereitzustellen, und erzeugt eine Signatur $s_B$, die von der zweiten ganzen Zufallszahl y, der zweiten Exponentialfunktion $f(\alpha)^{g(y)}$ und dem privaten Schlüssel b erhalten wird, um die ganze Zufallszahl y und den privaten Schlüssel b zu verbinden, wobei der zweite Korrespondent B die zweite Signatur $S_B$ für sich selbst vertraulich hält;

v) der zweite Korrespondent B übermittelt eine Nachricht, die die zweite Exponentialfunktion f$(\alpha)^{g(y)}$ enthält, an den ersten Korrespondenten A; und

vi) jeder der Korrespondenten konstruiert einen Sitzungsschlüssel K durch Potenzieren von Information, die durch den anderen Korrespondenten öffentlich gemacht wurde, mit Information, die für ihn selbst vertraulich ist, so dass durch eine anschließende Entschlüsselung von Information die Einrichtung eines gemeinsamen öffentlichen Schlüssels und damit die Identität der Korrespondenten bestätigt wird.

2. Verfahren nach Anspruch 1, wobei die durch den ersten Korrespondenten übermittelte Nachricht eine Identifizierung des ersten Korrespondenten enthält.

3. Verfahren nach Anspruch 1, wobei die durch den zweiten Korrespondenten übermittelte Nachricht eine Identifizierung des zweiten Korrespondenten enthält.

4. Verfahren nach einem der Ansprüche 1 bis 3, wobei die Information, die für die Korrespondenten selbst vertraulich ist, die erste Signatur bzw. die zweite Signatur ist.

5. Verfahren nach einem der vorangehenden Ansprüche, wobei die den Generator enthaltende erste Funktion f($\alpha$) der Generator selbst ist.

6. Verfahren nach einem der vorangehenden Ansprüche, wobei die den Generator enthaltende zweite Funktion f($\alpha$) der Generator selbst ist.

7. Verfahren nach einem der Ansprüche 1 bis 4, wobei die den Generator enthaltende erste Funktion f($\alpha$) den öffentlichen Schlüssel $p_B$ des zweiten Korrespondenten enthält.

8. Verfahren nach einem der Ansprüche 1 bis 4, wobei die den Generator enthaltende zweite Funktion f($\alpha$) den öffentlichen Schlüssel $p_A$ des ersten Korrespondenten enthält.

9. Verfahren nach Anspruch 8, wobei die den Generator enthaltende erste Funktion f($\alpha$) den öffentlichen Schlüssel $p_B$ des zweiten Korrespondenten enthält.

10. Verfahren nach einem der Ansprüche 1 bis 9, wobei die durch einen der Korrespondenten erzeugte Signatur die ganze Zufallszahl, die Exponentialfunktion und den privaten Schlüssel des einen Korrespondenten kombiniert.

11. Verfahren nach Anspruch 10, wobei die Signatur $S_A$ des Korrespondenten A die Form $x+r_A a\alpha^a \bmod(p-1)$

hat.

12. Verfahren nach Anspruch 10, wobei die Signatur $S_A$ des Korrespondenten A die Form $x+a\alpha^a(p_B)^x \bmod(p-1)$ hat.

13. Verfahren nach Anspruch 10, wobei die Signatur $S_A$ des Korrespondenten A die Form $xr_A+a\alpha^a$ hat.

14. Verfahren nach Anspruch 10, wobei die Signatur $S_B$ des Korrespondenten B die Form $y_B+r_B b\alpha^b \bmod(p-1)$ hat.

15. Verfahren nach Anspruch 10, wobei die Signatur $S_B$ des Korrespondenten B die Form $y+b\alpha^b(p_A)^y \bmod(p-1)$ hat.

16. Verfahren nach Anspruch 10, wobei die Signatur $S_A$ des Korrespondenten A die Form $x\alpha^a+ar_A$ hat.

17. Verfahren zum Transportieren eines Sitzungsschlüssels K zwischen einem Paar Korrespondenten A, B in einem Datenkommunikationssystem mit öffentlichem Schlüssel zum Einrichten eines gemeinsamen Schlüssels zum Ermöglichen eines Informationsaustauschs zwischen den Korrespondenten über einen Kommunikationskanal, wobei jeder der Korrespondenten einen privaten Schlüssel a bzw. b und einen öffentlichen Schlüssel $p_A$ bzw. $p_B$ aufweist, der von einem Generator $\alpha$ und dem jeweiligen privaten Schlüssel a bzw. b hergeleitet wird, wobei das Verfahren die Schritte aufweist:

i) der erste Korrespondent A wählt eine erste ganze Zufallszahl aus und potenziert eine erste Funktion f($\alpha$), die den Generator enthält, mit einem Exponenten g(x), um eine erste Exponentialfunktion f$(\alpha)^{g(x)}$ bereitzustellen;

ii) der erste Korrespondent A erzeugt eine erste Signatur $S_A$ von der ganzen Zufallszahl x, der Exponentialfunktion f$(\alpha)^{g(x)}$ und dem privaten Schlüssel a, um die ganze Zufallszahl x und den privaten Schlüssel a zu verbinden, wobei der erste Korrespondent A die erste Signatur für sich selbst vertraulich hält;

iii) der erste Korrespondent A übermittelt eine Nachricht, die die erste Exponentialfunktion f$(\alpha)^{g(x)}$ enthält, an den zweiten Korrespondenten B;

iv) der erste Korrespondent A berechnet den Sitzungsschlüssel K vom öffentlichen Schlüssel $p_B$ des zweiten Korrespondenten und der Signatur $S_A$; und

v) der zweite Korrespondent B verwendet den öffentlichen Schlüssel $p_A$ des ersten Korrespondenten und Information in der Nachricht, um einen dem Sitzungsschlüssel K entsprechenden Sitzungsschlüssel K' zu berechnen.

**18.** Verfahren nach Anspruch 17, wobei die Nachricht die erste Exponentialfunktion enthält und der Korrespondent B die erste Exponentialfunktion mit dem privaten Schlüssel b des Korrespondenten B kombiniert, um den Sitzungsschlüssel K' zu erzeugen.

**19.** Verfahren nach Anspruch 17 oder 18, wobei der erste Korrespondent A den Sitzungsschlüssel K durch Potenzieren einer Funktion des öffentlichen Schlüssels $p_B$ des Korrespondenten B mit einer Funktion der Signatur $S_A$ berechnet.

**20.** Verfahren nach einem der Ansprüche 17 bis 19, wobei die Signatur $S_A$ des Korrespondenten A die Form $x-r_A a\alpha^a \bmod(p-1)$ hat.

**21.** Verfahren nach einem der Ansprüche 17 bis 20, wobei die Signatur $S_B$ des Korrespondenten B die Form $y-r_B b\alpha^b \bmod(p-1)$ hat.

**Revendications**

**1.** Procédé d'établissement d'une clé de session entre une paire de correspondants A, B dans un système de communication de données à clé publique pour permettre l'échange d'informations entre eux sur un canal de communication, chacun desdits correspondants ayant une clé privée respective a, b et une clé publique $p_A$, $p_B$, dérivée d'un générateur $\alpha$ et desdites clés privées respectives a, b, ledit procédé comprenant les étapes consistant à :

i) un premier desdits correspondants A sélectionne un premier entier aléatoire x et élève une première fonction $f(\alpha)$ qui comprend ledit générateur à une puissance $g(x)$ pour obtenir une première fonction élevée à une puissance $f(\alpha)^{g(x)}$,

ii) ledit correspondant A génère une première signature $S_A$ à partir dudit entier aléatoire x, de ladite fonction élevée à une puissance $f(\alpha)^{g(x)}$ et de ladite clé privée a pour lier ledit entier x et ladite clé privée a, ledit premier correspondant A maintenant ladite première signature privée pour lui ;

iii) ledit premier correspondant A envoie à un deuxième correspondant B un message comprenant ladite fonction élevée à une puissance $f(\alpha)^{g(x)}$,

iv) ledit correspondant B sélectionne un deuxième entier aléatoire y et élève à une puissance une deuxième fonction $f(\alpha)$ qui comprend ledit générateur à une puissance $g(y)$ pour obtenir une deuxième fonction élevée à une puissance $f(\alpha)^{g(y)}$ et il génère une signature $S_B$ obtenue à partir du deuxième entier y, et de ladite deuxième fonction élevée à une puissance $f(\alpha)^{g(y)}$ et

de ladite clé privée b pour lier ledit entier y et ladite clé privée b, ledit deuxième correspondant B maintenant ladite deuxième signature $S_B$ privée pour lui ;

v) ledit deuxième correspondant B envoie un message audit premier correspondant A comprenant ladite deuxième fonction élevée à une puissance $f(\alpha)^{g(y)}$ ; et

vi) chacun desdits correspondants construit une clé de session K en élevant à une puissance une information rendue publique par l'autre correspondant avec l'information qui est privée pour eux, le déchiffrement ultérieur de l'information confirmant l'établissement d'une clé commune et de ce fait, l'identité desdits correspondants.

**2.** Procédé selon la revendication 1 dans lequel ledit message envoyé par ledit premier correspondant comprend une identification du premier correspondant.

**3.** Procédé selon la revendication 1 dans lequel ledit message envoyé par ledit deuxième correspondant comprend une identification dudit deuxième correspondant.

**4.** Procédé selon l'une quelconque des revendications 1 à 3 dans lequel ladite information qui est privée pour eux est la première signature et la deuxième signature respectives.

**5.** Procédé selon l'une quelconque des revendications précédentes dans lequel ladite première fonction $f(\alpha)$ qui comprend ledit générateur est ledit générateur lui-même.

**6.** Procédé selon l'une quelconque des revendications précédentes dans lequel ladite deuxième fonction $f(\alpha)$ qui comprend ledit générateur est ledit générateur lui-même.

**7.** Procédé selon l'une quelconque des revendications 1 à 4 dans lequel ladite première fonction $f(\alpha)$ qui comprend ledit générateur comprend la clé publique $p_B$ dudit deuxième correspondant.

**8.** Procédé selon l'une quelconque des revendications 1 à 4 dans lequel ladite deuxième fonction $f(\alpha)$ qui comprend ledit générateur comprend la clé publique $p_A$ dudit premier correspondant.

**9.** Procédé selon l'une quelconque revendication de la revendication 8 dans lequel ladite première fonction $f(\alpha)$ qui comprend ledit générateur comprend la clé publique $p_B$ dudit deuxième correspondant.

**10.** Procédé selon l'une quelconque des revendications 1 à 9, dans lequel ladite signature générée par un correspondant respectif parmi les correspondants combine l'entier aléatoire, la fonction élevée à une puissance et la clé privée de ce correspondant.

11. Procédé selon la revendication 10 dans lequel ladite signature $S_A$ du correspondant A est de la forme $x + r_A\, a\alpha^a$ mod (p-1).

12. Procédé selon la revendication 10 dans lequel ladite signature $S_A$ du correspondant A est de la forme $x + a\alpha^a\, (p_B)^x$ mod (p-1).

13. Procédé selon la revendication 10 dans lequel ladite signature $S_A$ du correspondant A est de la forme $xr_A + a\alpha^a$.

14. Procédé selon la revendication 10 dans lequel ladite signature $S_B$ du correspondant B est de la forme $y_B + r_B\, b\alpha^b$ mod (p-1).

15. Procédé selon la revendication 10 dans lequel ladite signature $S_B$ du correspondant B est de la forme $y + b\alpha^b\, (p_A)^y$ mod (p-1).

16. Procédé selon la revendication 10 dans lequel ladite signature $S_A$ du correspondant A est de la forme $x\alpha^a + ar_A$.

17. Procédé de transport d'une clé de session K entre une paire de correspondants A, B dans un système de communication de données à clé publique pour établir une clé commune pour permettre d'échanger des informations entre eux sur un canal de communication, chacun desdits correspondants ayant une clé privée respective a, b et une clé publique $p_A$, $p_B$ dérivée d'un générateur a et desdites clés privées respectives a, b, ledit procédé comprenant les étapes consistant à :

    i) un premier parmi lesdits correspondants A qui sélectionne un premier entier aléatoire x et élève une première fonction f($\alpha$) comprenant ledit générateur à une puissance g(x) pour obtenir une première fonction élevée à une puissance $f(a)^{g(x)}$ ;

    ii) ledit premier correspondant A génère une première signature $S_A$ à partir dudit entier aléatoire x et de ladite fonction élevée à une puissance $f(\alpha)^{g(x)}$ et de ladite clé privée a pour lier ledit entier et ladite clé privée a, ledit premier correspondant A maintenant ladite première signature privée pour lui ;

    iii) ledit premier correspondant A envoie à un deuxième correspondant B un message comprenant ladite première fonction élevée à une puissance $f(\alpha)^{g(x)}$,

    iv) ledit premier correspondant calcule ladite clé de session K à partir de ladite clé publique $p_B$ dudit deuxième correspondant B et de ladite signature $S_A$ ;

    v) ledit deuxième correspondant B utilise la clé publique $p_A$ dudit premier correspondant et l'information dans ledit message pour calculer une clé de session K' correspondant à ladite clé de session K.

18. Procédé selon la revendication 17 dans lequel ledit message comprend ladite première fonction élevée à une puissance et dans lequel ledit correspondant B combine ladite première fonction élevée à une puissance avec la clé privée b du correspondant B pour générer ladite clé de session K'.

19. Procédé selon la revendication 17 ou 18, dans lequel ledit premier correspondant A calcule ladite clé de session K en élevant à une puissance une fonction de ladite clé publique $p_B$ du correspondant B avec une fonction de ladite signature $S_A$.

20. Procédé selon les revendications 17 à 19 dans lequel ladite signature $S_A$ du correspondant A est de la forme $x - r_A\, a\alpha^a$ mod (p-1).

21. Procédé selon les revendications 17 à 20 dans lequel la signature S du correspondant B est de la forme $y - r_B\, b\alpha^b$ mod (p-1).

FIG. 1

EP 1 768 300 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0639907 A

**Non-patent literature cited in the description**

- **MATSUMOTO, T. ; TAKASHIMA, Y. ; IMAI, H.** On Seeking Smart Public-Key-Distribution Systems. *The Transactions of the IECE of Japan,* 1986, 99-106